# EUROPÄISCHE PATENTSCHRIFT

(11) **EP 0 340 867 B1**
(45) Veröffentlichungstag und Bekanntmachung des Hinweises auf die Patenterteilung: **06.04.1994**
(21) Anmeldenummer: 89201117.2
(22) Anmeldetag: 01.05.1989
(51) Int. Cl.: G02B 6/38, G02B 6/42, G02B 6/44, G02B 6/36

(54) **Verfahren und Vorrichtung zum Einbringen einer Mehrzahl von Lichtwellenleitern in eine Klemmzwinge**
Method and device for mounting a multiplicity of light-guides in a clamping fixture
Méthode et dispositif pour monter une multipicité de guides d'ondes lumineuses dans une pince étau

(30) Priorität: 06.05.1988 DE 3815459
(43) Veröffentlichungstag der Anmeldung: 08.11.1989
(73) Patentinhaber: Philips Patentverwaltung GmbH, 22335 Hamburg (DE); Philips Electronics N.V., 5621 BA Eindhoven (NL)
(72) Erfinder: Zell, Werner, Dr.rer.nat., D-5000 Köln 80 (DE); Becker, Johann, Dr.Ing., D-5063 Overath (DE); Boehm, Detlef, D-5206 Neunkirchen-S 1 (DE); Fröhlich, Günter, D-5000 Köln 30 (DE); Schade, Detlef, D-5000 Köln 80 (DE); Goletz, Bernhard, D-5000 Köln 50 (DE)
(74) Vertreter: Erdmann, Anton, Dipl.-Ing.

(56) Entgegenhaltungen:
- EP-A- 0 081 704
- EP-A- 0 211 221
- EP-A- 0 278 423
- DE-A- 3 328 052
- PATENT ABSTRACTS OF JAPAN Band 7,Nr. 121(P-199),25 Mai 1983;& JP-A- 58040504

## Beschreibung

Die Erfindung bezieht sich auf ein Verfahren zum Einbringen einer Mehrzahl von Lichtwellenleitern (LWL) in eine Klemmzwinge, zwischen deren Klemmbacken die Lichtwellenleiter nebeneinander in einer Ebene eingeklemmt werden.

In der EP-A-02 11 221 sind Klemmzwingen zur festen Halterung mehrerer parallel nebeneinander geführter Lichtwellenleiter (LWL) beschrieben, in welche auf einem Mehrfachwerkzeug in einer ersten Position die LWL eingelegt werden. Die Klemmzwingen sind in Längs- und Querrichtung auf dem Mehrfachwerkzeug verschiebbar. Sie werden in einen zweiten Bereich zur Endflächenpräparation und in einen dritten Bereich zur Herstellung einer Schweißverbindung verschoben. Wie die LWL in die Klemmzwingen eingefädelt werden, ist nicht beschrieben.

Der Erfindung liegt die Aufgabe zugrunde, ein einfach handhabbares Verfahren der eingangs genannten Art anzugeben, welches auch im Falle von auf verschiedenen getrennten Werkzeugen an den LWL durchzuführenden Bearbeitungsvorgängen eine Beibehaltung der Relativlage der einzelnen LWL ermöglicht.

Die Lösung gelingt durch die Merkmale des Anspruchs 1, d.h. daß die Klemmvorrichtung mittels Formschlußelemente in fixierter Position an einen Grundkörper einer Sortiervorrichtung zwischen zwei Sortiergabeln der Sortiervorrichtung derart angelegt wird, daß der Einführungsspalt der Sortiergabeln mit dem Aufnahmespalt der Klemmvorrichtung fluchtet, daß danach die LWL in die Sortiergabeln und den zunächst durch Lösen seiner Klemmbacken erweiterten Aufnahmespalt eingelegt werden, daß die LWL darauf mittels einer in die Einführungsspalte und/oder den Aufnahmespalt eingeführter Schiebefolie(n) aneinander gedrückt werden, daß dann die Klemmung der Klemmbacken bewirkt und schließlich die Klemmvorrichtung mitsamt der eingelegten LWL aus der Sortiervorrichtung entnommen wird.

Erfindungsgemäß sind die Einfädelungshilfsmittel nicht Bestandteil der Klemmzwinge, welche deshalb bei geringer Baugröße sehr kompakt aufgebaut werden kann. Das Einfügen der LWL in die Klemmzwinge geschieht außerhalb der eigentlichen Bearbeitungswerkzeuge, welche der Vorbereitung und/oder Verbindung von LWL-Gruppen dienen. Nachdem das exakte und unverschiebbare Aneinanderliegen der LWL mittels der Klemmzwinge bewirkt ist, wird diese mitsamt der von ihr gehaltenen LWL aus der Sortiervorrichtung entnommen und kann danach in jeder der erforderlichen Folgevorrichtungen in definierter Lage eingesetzt werden.

Da beidseitig der Klemmzwinge Sortiergabeln vorgesehen sind, ergibt sich im gesamten Längenbereich des Aufnahmekanals der Zwinge eine exakte Parallelführung der LWL.

Vorzugsweise werden die LWL von der Schiebefolie gegen Anschlaggrundflächen der Einfädelungskanäle und/oder des Aufnahmekanals gedrückt. Dadurch wird eine unmittelbare Anlage der einzelnen LWL in definierter Relativlage zum Sortiergerät erreicht.

Eine für die Ausübung des erfindungsgemäßen Verfahrens vorteilhaft geeignete Sortiervorrichtung ist dadurch gekennzeichnet, daß sie einen Grundkörper mit zwei mit Freiraum einander gegenüberliegenden Sortiergabeln mit je einem Ein führungsspalt aufweist, deren Einfädelungsspalte zueinander fluchten, und daß sie Formschlußelemente aufweist zur Fixierung der Klemmvorrichtung in der Weise, daß die Einführungsspalte mit dem Aufnahmespalt fluchten zwischen den Sortiergabeln. Die Klemmzwinge ist über Formschlußelemente einfach und lösbar in die Sortiervorrichtung einlegbar und wieder herausnehmbar. Vorzugsweise ist vorgesehen, daß die Formschlußeinrichtungen der Sortiervorrichtung in Formschlußeinrichtungen der Klemmzwinge eingreifen, welche zur Festlegung der Klemmzwinge auf Vorrichtungen zur Herstellung und/oder Vorbereitung einer Koppelverbindung der LWL vorgesehen sind. Dann ist die Klemmzwinge mittels nur einfach vorgesehener Formschlußelemente mit jeweils gleichartigen zugeordneten Formschlußelementen der Sortiervorrichtung und der Folgewerkzeuge verbindbar.

Gemäß einer vorteilhaften Ausführungsform ist vorgesehen, daß die Formschlußelemente an der Sortiervorrichtung angeordnete Stifte sind, von denen einer in eine zugeordnete Bohrung der Klemmzwinge und der andere in ein Langloch der Klemmzwinge eingreift, welches in Richtung der Verbindungslinien der Stifte verläuft. Derartige Formschlußelemente sind einfach herstellbar und ermöglichen eine exakte Lagesicherung der Klemmzwinge.

Das Herausnehmen der eine Gruppe von LWL klemmenden Klemmzwinge aus der Sortiervorrichtung wird dadurch erleichtert, daß eine der die Einführungskanäle bildenden Seitenwandungen abklappbar ist.

Das Ein- und Andrücken der LWL in die Einfädelungskanäle der Sortiergabel und/oder in den Aufnahmekanal der Klemmzwinge wird dadurch erleichtert, daß die Schiebefolie an einer Schiebehalterung der Sortiervorrichtung angeordnet ist, welche in Längslagern der Sortiervorrichtung entgegen Federdruck verschiebbar ist.

Die Erfindung wird anhand der Beschreibung von in der Zeichnung dargestellten vorteilhaften Klemmzwingen und Sortiervorrichtungen näher erläutert.
- Fig. 1: zeigt eine erste Ausführungsform einer Klemmzwinge mit klemmend gehaltenen LWL.
- Fig. 2: zeigt die Klemmzwinge nach Fig. 1 vor dem Einsetzen in eine Sortiervorrichtung.
- Fig. 3: zeigt eine Schiebefolie.
- Fig. 4: zeigt eine Sortiervorrichtung.
- Fig. 5: zeigt die Vorderansicht einer zweiten Ausführungsform einer erfindungsgemäßen Sortiervorrichtung mit einer eingelegten zweiten Ausführungsform einer Klemmzwinge.
- Fig. 6: zeigt teilweise geschnitten eine Seitenansicht der Anordnung nach Fig. 5.
- Fig. 7: zeigt einen Schnitt durch die Anordnung nach Fig. 5 im Bereich einer Sortiergabel.
- Fig. 8: zeigt die Aufsicht auf eine schematisch dargestellte Schweißeinrichtung, in welche Klemmzwingen der in Fig. 5 dargestellten Art eingelegt sind.

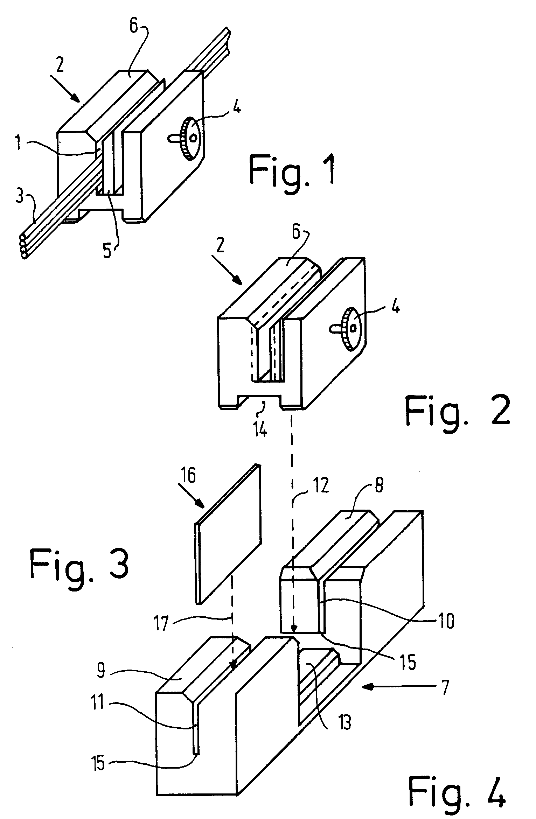

Im Aufnahmekanal 1 der in Fig. 1 perspektivisch dargestellten Klemmzwinge 2 sind fünf LWL 3 parallel nebeneinander eingeklemmt. Mittels der Stellschraube 4 ist die Klemmbacke 5 an die LWL 3 gedrückt, welche damit zwischen den weichelastisch beschichteten Wandungen der Klemmbacke 5 und deren Gegenanlage 6 der Klemmzwinge 2 durch elastische Klemmkraft unverrückbar gehalten sind.

Anhand der Figuren 2 bis 4 wird erläutert, wie die LWL 3 in den Aufnahmekanal 1 eingelegt werden.

Die Sortiervorrichtung 7 weist zwei Sortiergabeln 8 und 9 auf, in welche zueinander fluchtende Einfädelungskanäle 10 bzw. 11 eingebracht sind. In den Freiraum zwischen den Sortiergabeln paßt die Klemmzwinge 2, welche in Richtung des Pfeils 12 eingesetzt wird. Der Steg 13 greift dabei formschlüssig in die Nut 14 der Klemmzwinge 2 ein, welche dadurch auch gegen seitliches Verschieben gesichert ist. Die Wandung der Gegenanlage 6 der Klemmzwinge 2 fluchtet dann zu den entsprechenden Flächen der Einfädelungskanäle 10 und 11. Dann werden die LWL 3 durchgehend in die Einfädelungskanäle 10 und 11 eingelegt und mittels der Schiebefolie 16 in Pfeilrichtung 12 an die Bodenflächen 14 bzw. 15 gedrückt. Danach erstrecken sich die LWL im Bereich des geöffneten Aufnahmekanals 1 der Klemmzwinge 2 parallel und aneinander anliegend. Nach dem Festklemmen der LWL 3 durch Betätigung der Stellschraube 4 wird die Klemmzwinge 2 mitsamt der gehaltenen LWL 3 entgegen der Richtung des Pfeils 12 aus der Sortiervorrichtung 7 entnommen.

Die lichte Weite der Einfädelungskanäle 10 und 11 ist geringfügig größer als der Durchmesser der LWL 3. Die Einfädelungskanäle können jedoch weichelastisch verengte Abschnitte aufweisen, welche eine schwache Halteklemmung der LWL 3 bewirken.

Die Schiebefolie ist geringfügig dünner als die Weite der Einfädelungskanäle.

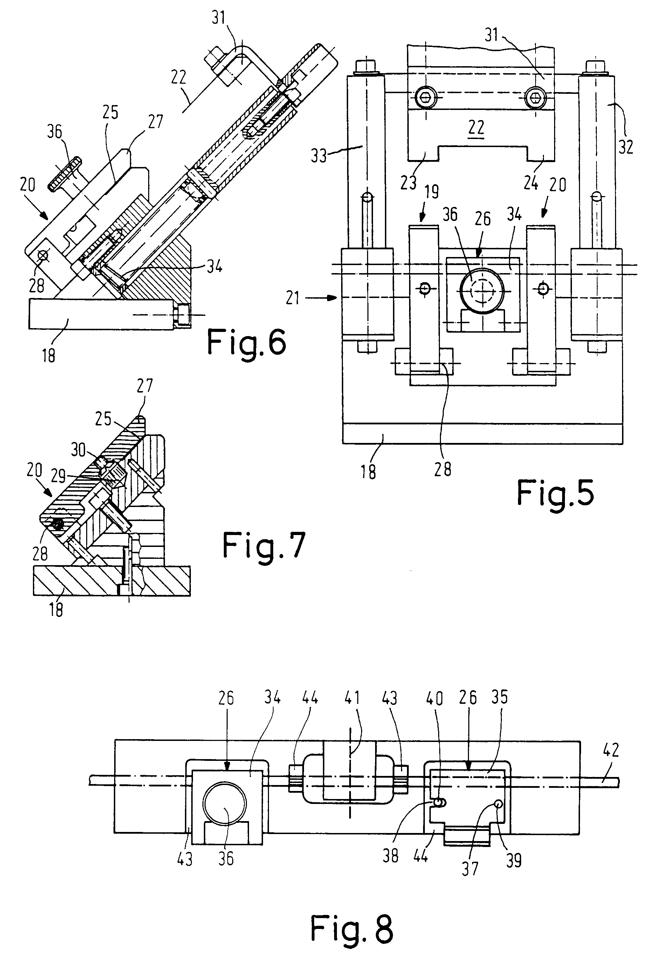

In den Figuren 5 bis 7 ist eine weitere Ausführungsform einer erfindungsgemäßen Sortiervorrichtung dargestellt, welche als kompaktes und einfach handhabbares Gerät aufgebaut und deshalb für häufig wiederholte Arbeitsvorgänge besonders geeignet ist.

Auf einem gemeinsamen Basisblock 18 ist außer den Sortiergabeln 19 und 20 eine Linear-Führungseinrichtung 32,33 zur Betätigung der Schiebefolie 22 fest angeordnet, welche die LWL mit ihren vorspringenden Abschnitten 23 und 24 nur im Bereich der Einfädelungskanäle 25 (Fig.6) der Sortiergabeln 19 und 20 schieben soll.

Zur Erleichterung des späteren Herausnehmens der von der Klemmzwinge 26 gehaltenen LWL ist ein Wandungsteil 27 um das Drehgelenk 28 gegen die von einem Permanentmagneten 29 (Fig.7) auf den als Schraube 30 ausgebildeten Anker ausgeübte Haltekraft abklappbar.

Die Schiebefolie 22 ist an einer Halterung 31 befestigt, welche mittels der Linear-Führungseinrichtungen 32 und 33 entgegen der Rückstellkraft der Feder 34 in Richtung auf die Sortiergabeln 19 und 20 führbar ist, wodurch die Schiebefolie in die Einfädelungskanäle 25 der Sortiergabeln 19 und 20 eingeführt wird und dabei auf die vorher eingelegten LWL drückt.

Im Falle der in den Fig. 5 bis 7 dargestellten Sortiervorrichtung 21 besteht die Klemmzwinge 26 aus zwei gelenkig miteinander verbundenen Klemmbacken 34 und 35, welche zur Klemmung der eingebrachten LWL durch die Stellschraube 36 gegeneinander bewegbar sind.

Die an der Sortiervorrichtung 21 anliegende Klemmbacke ist in Figur 8 erkennbar. Sie weist als Formschlußeinrichtungen eine Bohrung 37 und ein Langloch 38 auf, in welche zugeordnete Stifte (nicht dargestellt) der Sortiervorrichtung 21 eingreifen. Gleichartige Stifte 39 und 40 sind in Fig. 8 erkennbar als Aufnahmeformschlußelemente einer schematisch angedeuteten Schweißvorrichtung, mit welcher von zwei Klemmzwingen 26 gehaltene gleichartige Gruppen von entlang der Bahn 42 geführten LWL an der Stelle der gestrichelten Linie 41 miteinander verschweißt werden sollen.

Die Feinausrichtung der aus den Klemmzwingen 26 herausragenden und dort von der Beschichtung befreiten LWL erfolgt durch übliche Sortierkämme 43 bzw. 44. Die axiale Ausrichtung und Gegenüberlage der beiden Gruppen von LWL wird durch die formschlüssige Fixierung der Klemmzwingen 26 in Vertiefungen 43 bzw. 44 der Schweißeinrichtung gewährleistet.

Da die flexible Schiebefolie 22 nur im Bereich der Sortiergabeln 19 und 20 an die LWL drückt und dabei nicht in den Aufnahmekanal der Klemmzwinge 26 eindringt, kann sie beim Festklemmen der LWL nicht mitgeklemmt werden.

Das erfindungsgemäße Verfahren und die dazu geeigneten Sortiervorrichtungen sind zur Planarisierung einer losen Gruppe von Einzel-LWL geeignet. Ebenso können damit jedoch Flachbandgruppen von bereits in einer Ebene aneinander geklebten LWL in definierter Position in einer Klemmzwinge festgelegt werden.

## Patentansprüche

1. Verfahren zum Einbringen einer Vielzahl von Lichtwellenleitern (LWL) in eine Klemmvorrichtung, zwischen deren Klemmbacken die Lichtwellenleiter nebeneinander in ebener Form in einen Aufnahmespalt eingeklemmt werden, mit den Schritten,
daß die Klemmvorrichtung (2,26) mittels Formschlußelemente (13,14,37,38,39,40) in fixierter Position an einen Grundkörper einer Sortiervorrichtung zwischen zwei Sortiergabeln (8,9,19,20) der Sortiervorrichtung derart angelegt wird, daß der Einführungsspalt (10,11,25) jeder der Sortiergabeln (8,9,19,20) mit dem Aufnahmespalt (1) der Klemmvorrichtung fluchtet, daß danach die Lichtwellenleiter (3) in die Spalte der Sortiergabeln (8,9,19,20) und den zunächst durch Lösen seiner Klemmbacken (5,34) erweiterten Aufnahmespalt (1) eingelegt werden, daß die Lichtwellenleiter (3) darauf mittels einer in die Einführungsspalte (10,11,25) und/oder den Aufnahmespalt (1) eingeführter Schiebefolie(n) (16,22) aneinander gedrückt werden, daß dann die Klemmung der Klemmbacken (5,34) bewirkt und schließlich die Klemmvorrichtung mitsamt der eingelegten Lichtwellenleiter (3) aus der Sortiervorrichtung (7,21) entnommen wird.

2. Verfahren nach Anspruch 1,
dadurch gekennzeichnet, daß die Lichtwellenleiter (3) von der Schiebefolie (16,22) gegen Anschlaggrundflächen (14,15) der Einfädelungsspalte (10,11,25) und/oder des Aufnahmespalts (5) gedrückt werden.

3. Sortiervorrichtung zum Einbringen einer Vielzahl von Lichtwellenleitern in eine Klemmvorrichtung, zwischen deren Klemmbacken die Lichtwellenleiter nebeneinander in ebener Form in einem Aufnahmespalt eingeklemmt werden,
dadurch gekennzeichnet, daß sie einen Grundkörper (18) mit zwei mit Freiraum einander gegenüberliegenden Sortiergabeln (8,9,19,20) mit je einem Einführungsspalt zum Einbringen einer Vielsahl von Lichtwellenleitern in ebener Form aufweist, deren Einführungsspalte (10,11,25) zueinander fluchten und daß sie zwischen den Sortiergabeln (8,9,19,20) Formschlußelemente (13,14,37,38,39,40) aufweist zur Fixierung der Klemmvorrichtung in der Weise, daß die Einführungsspalte (10,11,25) mit dem Aufnahmespalt (1) der Klemmvorrichtung fluchten.

4. Vorrichtung nach Anspruch 3,
dadurch gekennzeichnet, daß die Formschlußelemente (13) der Sortiervorrichtung (7,21) in Formschlußelemente (14,37,38) der Klemmzwinge (2,26) eingreifen, welche zur Festlegung der Klemmvorrichtung auf Vorrichtungen (Fig. 8) zur Herstellung und/oder Vorbereitung einer Koppelverbindung der Lichtwellenleiter (3) vorgesehen sind.

5. Vorrichtung nach Anspruch 3 oder 4,
dadurch gekennzeichnet, daß die Formschlußelemente (2) an der Sortiervorrichtung (21) angeordnete Stifte sind, von denen einer in eine zugeordnete Bohrung (37) der Klemmvorrichtung (26) und der andere in ein Langloch (38) der Klemmvorrichtung (26) eingreift, welches in Richtung der Verbindungslinien der Stifte verläuft.

6. Vorrichtung nach einem der Ansprüche 3 bis 5,
dadurch gekennzeichnet, daß eine der den Einführungsspalt (25) bildenden Seitenwandungen (27) abklappbar ist.

7. Vorrichtung nach einem der Ansprüche 3 bis 6,
dadurch gekennzeichnet, daß die Schiebefolie (22) an einer Schiebehalterung (31) der Sortiervorrichtung (21) angeordnet ist, welche an Längslagern (32,33) der Sortiervorrichtung entgegen Federdruck (34) verschiebbar ist.

## Claims

1. A method of inserting a plurality of optical waveguides (OWGs) into a clamping device between the clamping jaws of which the optical waveguides are clamped in a take-up aperture in a coplanar and side-by-side arrangement, said method comprising the following steps:
the clamping device (2, 26) is fidexly provided on a base member of a sorting device between two sorting forks (8, 9, 19, 20) of the sorting device by means of form-locking elements (13, 14, 37, 38, 39, 40) in such a manner that the feed-in aperture (10, 11, 25) of each sorting fork (8, 9, 19, 20) is in alignment with the take-up aperture (1) of the clamping device, thereafter the optical waveguides (3) are placed in the aperture of the sorting forks (8, 9, 19, 20) and in the take-up aperture (1) which has previously been widened by loosening its clamping jaws (5, 34), the optical waveguides (3) are then pressed together by means of (a) sliding-foil(s) (16, 22) which is (are) inserted into the feed-in aperture (10, 11, 25) and/or take-up aperture (1), whereafter the clamping action of the clamping jaws (5, 34) is brought about and finally the clamping device is taken from the sorting device (7, 21) together with the optical waveguides (3) inserted therein.

2. A method as claimed in Claim 1, characterized in that the sliding of foil (16, 22) presses the optical waveguides (3) against bottom areas (14, 15) of the threading apertures (10, 11, 25) and/or take-up aperture (5), said bottom areas serving as stops.

3. A sorting device for inserting a plurality of optical waveguides into a clamping device between the clamping jaws of which the optical waveguides are clamped in a take-up aperture in a coplanar and side-by-side arrangement, characterized in that it has a base member (18) with two spaced-apart facing sorting forks (8, 9, 19, 20), each having a feed-in aperture for inserting a plurality of coplanar optical waveguides, and having feed-in apertures (10, 25) which are in alignment with each other, and in that it has form-locking elements (13, 14, 37, 38, 39, 40) by means of which the clamping device is fixed in such a manner that the feed-in apertures (10, 11, 25) are in alignment with the take-up aperture (1) of the clamping device.

4. A device as claimed in Claim 3, characterized in that the form-locking elements (13) of the sorting device (7, 21) engage form-locking elements (14, 37, 38) of the clamping device (2, 26), which are provided for the purpose of fixing the clamping device on devices (Fig. 8) for the manufacture and/or preparation of a splice between the optical waveguides (3).

5. A device as claimed in Claim 3 or 4, characterized in that the form-locking elements (2) are constituted by pins provided on the sorting device (21), one pin projecting into an associated bore (37) of the clamping device (26) and the other pin projecting into a slotted hole (38) in the clamping device (26), which hole extends in the direction of the connecting lines of the pins.

6. A device as claimed in any one of the Claims 3 to 5, characterized in that one of the side walls (27) constituting the feed-in aperture (25) can be let down.

7. A device as claimed in any one of the Claims 3 to 6, characterized in that the sliding-foil (22) is provided in a sliding holder (31) of the sorting device (21), which is slidable against the action of a spring (34) along longitudinal bearings (32, 33) of the sorting device.

## Revendications

1. Procédé pour introduire une multiplicité de guides de lumière dans un dispositif de serrage, entre les mâchoires duquel les guides de lumière sont serrés les uns situés à côté des autres, dans le même plan, dans une fente de réception, comportant les étapes qu'au moyen d'éléments emboîtants (13, 14, 37, 38, 39, 40) le dispositif de serrage (2, 26) est disposé, dans une position fixe, contre un corps de fond d'un dispositif de triage, entre deux fourches de triage (8, 9, 19, 20) du dispositif de triage, de manière que la fente d'introduction (10, 11, 25) de chacune des fourches de triage (8, 9, 19, 20) est alignée par rapport à la fente de réception (1) du dispositif de serrage, qu'ensuite les guides de lumière (3) sont introduits dans la fente des fourches de triage (8, 9, 19, 20) et dans la fente de réception élargie (1) après que l'on a desserré ses mâchoires (5, 34), que les guides de lumière (3) sont alors serrés les uns contre les autres au moyen d'une (des) feuille(s) coulissante(s) (16,22) introduite(s) dans les fentes d'introduction (10, 11, 25) et/ou la fente de réception (1), qu'ensuite le serrage des mâchoires (5, 34) est effectué et que finalement le dispositif de serrage conjointement avec les guides de lumière (3) mis en place est enlevé du dispositif de triage (7, 21).

2. Dispositif selon la revendication 1, caractérisé en ce que la feuille coulissante (16, 22) serre les guides de lumière (3) contre les surfaces de fond de butée (14, 15) des fentes d'introduction (10, 11, 25) et/ou de la fente de réception (1).

3. Dispositif de triage pour introduire une multiplicité de guides de lumière dans un dispositif de serrage, entre les mâchoires duquel les guides de lumière sont serrés les uns situés à côté des autres, dans le même plan, dans une fente de réception, caractérisé en ce qu'il comporte un corps de fond (18) présentant deux fourches de triage espacées mutuellement opposées (8, 9, 19, 20) chacune munie d'une fente d'introduction pour l'introduction d'une multiplicité de guides de lumière situés dans le même plan, dont les fentes d'introduction (10, 11, 25) sont mutuellement alignées et en ce qu'elles présentent entre les fourches de triage (8, 9, 19, 20) des éléments emboîtants (13, 14, 37, 38, 39, 40) pour fixer le dispositif de serrage de manière que les fentes d'introduction (10, 11, 25) sont alignées par rapport à la fente de réception (1) du dispositif de serrage.

4. Dispositif selon la revendication 3, caractérisé en ce que les éléments emboîtants (13) du dispositif de triage (7, 21) s'engagent dans des éléments emboîtants (14, 37, 38) du dispositif de serrage (2, 26) prévus pour la fixation du dispositif de serrage sur des dispositifs (voir la figure 8) de fabrication et/ou de préparation d'un accouplement des guides de lumière (3).

5. Dispositif selon les revendications 3 ou 4, caractérisé en ce que les éléments emboîtants (2) sont constituées de broches prévues au dispositif de triage (21), l'une des deux broches s'engageant dans un alésage associé (37) pratiqué dans le dispositif de serrage (26) et l'autre broche s'engageant dans un trou oblong (38) percé dans le dispositif de serrage (26) et ledit trou s'étendant dans le sens des lignes de liaison des broches.

6. Dispositif selon l'une des revendications 3 à 5, caractérise en ce que l'une des parois latérales (27) constituant la fente d'introduction (25) peut être rabattue.

7. Dispositif selon l'une des revendications 3 à 6, caractérisé en ce que la feuille coulissante (22) est fixée à un support coulissant (31) du dispositif de triage (21), qui en surmontant la pression d'un ressort (34) peut être déplacée au moyen des dispositifs de guidage linéaires (32, 33).
